# EUROPÄISCHE PATENTSCHRIFT

(11) **EP 2 133 576 B1**
(45) Veröffentlichungstag und Bekanntmachung des Hinweises auf die Patenterteilung: **10.05.2017**
(21) Anmeldenummer: 09006975.8
(22) Anmeldetag: 25.05.2009
(51) Int. Cl.: F15B 15/18, F15B 15/20, B61F 5/30, F16F 9/19, F16F 9/43, F16F 9/48, B61F 5/38, F16F 9/46

(54) **Stellglied sowie Drehgestellsteuerung**
Actuator and bogie control
Actionneur et commande de bogie

(30) Priorität: 09.06.2008 DE 102008027474
(43) Veröffentlichungstag der Anmeldung: 16.12.2009
(73) Patentinhaber: Liebherr-Aerospace Lindenberg GmbH, 88161 Lindenberg/Allgäu (DE)
(72) Erfinder: Gaile, Anton, Dipl.-Ing., 88299 Leutkirch (DE)
(74) Vertreter: Herrmann, Uwe

(56) Entgegenhaltungen:
- EP-A2- 1 447 589
- DE-A1- 1 550 812
- DE-U1-202006 016 451
- FR-A- 1 429 500

## Beschreibung

Die vorliegende Erfindung betrifft ein Stellglied mit einem Hydraulikspeicher (30) und einem Hydraulikzylinder, der durch einen Kolben mit Kolbenstange in einen Kolbenraum und einen Ringraum unterteilt ist, wobei Kolbenraum und Ringraum mit einem Hydraulikspeicher verbindbar sind sowie ferner eine Drehgestellsteuerung für ein Drehgestell. Schienenfahrzeuge, insbesondere schwere Lokomotiven benötigen für die Kurvenfahrt Unterstützung bei der Ausdrehbewegung der Drehgestelle, um die quasistatischen Querkräfte zwischen Rad und Schiene zu reduzieren. Derartige Vorrichtungen sind insbesondere bei schweren Lokomotiven notwendig, um die von den einschlägigen Normen vorgegebenen Höchstwerte einzuhalten.

Hierzu sind bereits mechanische und/oder hydraulische Drehgestellkopplungen vorgeschlagen worden, die jedoch in ihrer Wirkungsweise begrenzt sind. Insbesondere sind diese Systeme nicht in der Lage, die Ausdrehbewegung aktiv zu unterstützen.

Aus der EP 1 447 589 ist ferner bereits ein aktiver Dämpfer bzw. ein Stellglied eines Drehgestell eines Schienenfahrzeugs bekannt, der über eine erhöhte hydraulische Steifigkeit verfügt. Dieser Dämpfer weist einen Hydraulikzylinder auf, der durch einen Kolben mit Kolbenstange in einen Kolbenraum und Ringraum unterteilt ist, wobei Kolbenraum und Ringraum mit einem Ölspeicher verbunden sind. Im Boden des Hydraulikzylinders ist ein Dämpfungsventil und ein Rückschlagventil angeordnet, so dass in Zug- und in Druckrichtung ein gleichgerichteter Ölstrom erzeugt wird, und wobei ferner ein kolbenstangenseitiges Rückschlagventil in der Verbindungsleitung zwischen dem Hydraulikölspeicher und dem Ringraum vorhanden ist, das den Ölstrom vom Ringraum in Richtung Hydraulikölspeicher sperrt. Dieser Dämpfer kann zudem mit einer eigenen Motor-Pumpeinheit ausgeführt sein, so dass er hydraulisch unabhängig aktiv ist.

Die FR 1 429 500 zeigt ein Stellglied mit einem Hydraulikzylinder, bei dem die Kolbenstange hohl ausgeführt ist und bei dem ein Röhrenelement den Zylinder mittig durchläuft und einen ungehinderten Durchfluss von Hydraulikflüssigkeit durch die Mitte des Zylinders ermöglicht. Auf diese Weise soll es ermöglicht werden, beliebige Bewegungen des Stellglieds unabhängig vom Hub des Zylinders und ohne Rücknahme der Haltekraft im Zylinder durchzuführen.

In der DE 15 50 812 wird ein elektrohydraulisches Verstellgerät mit hydraulischem Akkumulator offenbart, bei dem bei einem Stromausfall des hydraulischen Akkumulators ein selbstständiges Verstellen des Verstellgeräts erfolgt. Dabei ist der hydraulische Akkumulator so angeordnet, dass ein selbstständiges Füllen desselben nach erfolgter Energieentnahme bei Stromausfall automatisch beim nächsten Einfahrvorgang des Verstellgeräts erfolgt. Hierdurch können Sicherheitsvorschriften, nach denen bei einem Stromausfall noch eine Bewegungsfunktion des Verstellgeräts ausführbar sein muss, eingehalten werden.

Es hat sich jedoch als wünschenswert herausgestellt, insbesondere den Aufbau eines Stellgliedes weiter zu vereinfachen sowie des weiteren die seitens eines Stellgliedes aufgebrachte Kraft stufenlos regeln zu können.

Es daher die Aufgabe der vorliegenden Erfindung, ein aus dem Stand der Technik bekanntes Stellglied in vorteilhafter Weise weiterzubilden, insbesondere dahingehend, dass es einen einfacheren Aufbau aufweist und/oder stufenlos regel- bzw. ansteuerbar ist.

Diese Aufgabe wird durch ein Stellglied mit den Merkmalen des Anspruchs 1 gelöst. Danach ist vorgesehen, dass ein Stellglied mit einem Hydraulikzylinder vorgesehen ist, der durch einen Kolben mit Kolbenstange in einen Kolbenraum und einen Ringraum unterteilt ist, wobei Kolbenraum und Ringraum mit einem Hydraulikspeicher verbindbar sind, sowie dass wenigstens ein Ventil vorgesehen ist, wobei in einer ersten Stellung des Ventils der Kolbenraum mit dem Ringraum verbunden ist und in einer zweiten Stellung des Ventils der Kolbenraum mit dem Hydraulikspeicher verbunden ist, wobei das Ventil in einer dritten Stellung den Kolbenraum isoliert und den Ringraum mit dem Hydraulikspeicher verbindet, und wobei das Stellglied mittels einer Kontrolleinheit ansteuerbar ist. Das wenigstens ein Ventil kann dabei als einzelnes Ventil, vorzugsweise Magnetventil ausgeführt sein, dass entsprechend geschaltet werden kann. Genausogut kann vorgesehen sein, dass zwei oder mehrere Ventile vorgesehen sind, die die entsprechenden Schaltzustände der ersten bzw. zweiten Stellung schalten.

Es kann dabei vorgesehen sein, dass Kolbenraum und Ringraum jeweils auch mit eigenen Leitungen mit dem Hydraulikspeicher verbunden sind. Der Hydraulikspeicher kann beispielsweise als Hydraulikölspeicher ausgeführt sein. In dem Zustand, in dem in der ersten Stellung des Ventils der Kolbenraum mit dem Ringraum verbunden ist, kann der Kolben ausgefahren werden. In der zweiten Stellung des Ventils kann der Kolben eingefahren werden. Es ergibt sich die Möglichkeit, mit einer einzelnen Pumprichtung der Hydraulikfluids in Verbindung mit der entsprechenden Ventilstellung das Stellglied entweder ein- oder auszufahren. Der Hydraulikzylinder kann als hydraulischer Stellzylinder mit unausgeglichenen Kolbenflächen ausgeführt sein, wobei ferner in Zug- bzw. Druckrichtung des Hydraulikzylinders ein gleichgerichteter Druck bzw. Hydraulikfluidstrom, insbesondere Ölstrom erzeugt wird.

Insgesamt ergibt dadurch sich der Vorteil einer einfachen, kompakten und robusten Bauweise, wobei zugleich eine hohe hydraulische Steifheit erreicht wird. Ferner lassen sich die Kräfte beim Einziehen bzw. Ausfahren des Stellgliedes unabhängig einstellen. Ferner wird es durch den erfindungsgemäßen Aufbau möglich, das Stellglied stufenlos zu regeln bzw. anzusteuern. Auch kann das Stellglied vorteilhaft als Dämpfer wirken bzw. wird die Dämpfungswirkung des Stellgliedes erhöht. In diesem Zusammenhang kann vorgesehen sein, dass die Verbindung zwischen Ringraum und Hydraulikspeicher eine Drossel wie ein Druckbegrenzungs- oder Proportional-Druckbegrenzungsventil aufweist, so dass die Dämpfungswirkung noch weiter erhöht werden kann.

Die Kontrolleinheit ist vorzugsweise derart ausgeführt, dass sie das wenigstens eine Stellglied elektronisch bzw. elektrisch ansteuert. Dabei können an die Kontrolleinheit der Positionssensor, der Ventilblock oder die einzelnen Ventile und der Motor-Pumpeneinheit angeschlossen sein. Bevorzugt wird es, wenn die Kontrolleinheit über einen 24 V (DC) Anschluss mit der übergeordneten Steuerung des Schienenfahrzeugs in Verbindung steht.

Es kann ferner vorgesehen sein, dass wenigstens ein Druckbegrenzungsventil vorgesehen ist, wobei mittels des Druckbegrenzungsventils der Ringraum und der Hydraulikspeicher verbunden werden können und wobei mittels des Druckbegrenzungsventils der Druck im Ringraum eingestellt wird oder einstellbar ist. Durch das Druckbegrenzungsventil wird es möglich, für den Vorgang z.B. des Ausfahrens eine Lastbegrenzung vorzusehen. Der Druck im Ringraum kann hierdurch eingestellt und begrenzt werden. Die anliegende Kraft läßt sich somit noch genauer einstellen bzw. regeln. Das Druckbegrenzungsventil kann als Proportional-Druckbegrenzungsventil ausgeführt sein.

Des weiteren ist denkbar, dass ein Wegeventil vorgesehen ist, wobei das Wegeventil parallel dem Druckbegrenzungsventil angeordnet ist. Mittels des Druckbegrenzungsventils kann somit einerseits der Druck im Ringraum begrenzt werden, andererseits wird es möglich, durch das parallelgeschaltete Wegeventil das Druckbegrenzungsventil zu umgehen. Dadurch kann das Stellglied kraftfrei geschaltet werden, wodurch das Stellglied mit zwei Kraftniveaus betrieben werden kann.

Es ist darüber hinaus möglich, dass das Stellglied eine integrierte Motor-Pumpeneinheit aufweist. Diese Motor-Pumpeneinheit kann mit dem Ringraum verbunden sein. Dadurch ergibt sich der Vorteil, dass das Stellglied keinerlei zuführende, externe Hydraulikleitungen benötigt, sondern hydraulisch autark arbeitet. Das Stellglied ist folglich in der Lage, selbst aktiv Zug- und Druckkräfte zu erzeugen. Mittels des seitens der Motor-Pumpeneinheit erzeugten Hydraulikfluidstromes bzw. -druckes wird der Kolben beispielsweise in der ersten Stellung des Ventils ausgefahren und in der zweiten Stellung des Ventils eingefahren.

In vorteilhafter Ausführungsform kann vorgesehen sein, dass das Stellglied als integrierte Baugruppe ausgeführt ist. Dadurch ergibt sich eine besonders kompakte Bauweise, die sich z.B. aufgrund standardisierter Schnittstellen wie elektrischer Anschlüsse und/oder vordefinierter Lagerstellen leicht in z.B. einem Drehgestell eines Schienfahrzeug integrieren, aber während der Betriebslebensdauer leicht warten oder auch austauschen lässt.

Eine weitere denkbare Ausführungsform besteht darin, dass das Stellglied einen Ventilblock und ein Zylindergehäuse aufweist, wobei der Ventilblock integraler Bestandteil des Zylindergehäuses ist. Dadurch wird einerseits eine kompakte Bauweise und andererseits eine Kapselung der Ventile z.B. gegen Verschmutzen erreicht. Durch das Zusammenfassen zu einem Ventilblock wird ferner die Wartung der Ventile vereinfacht, da diese in räumlicher Zugehörigkeit angeordnet sind, was z.B. eine Funktionsprüfung im Rahmen einer routinemäßigen Wartung erleichtert. So können beispielsweise schadhafte Ventile schnell erkannt und einfach ausgetauscht werden.

Darüber hinaus kann vorgesehen sein, dass die Motor-Pumpeneinheit innerhalb des Hydraulikreservoirs angeordnet ist. Dadurch ergibt sich der Vorteil, dass die Motor-Pumpeneinheit nicht über eine eigene Abdichtung verfügen muss, da sich die Motor-Pumpeneinheit innerhalb des abgedichteten Hydraulikreservoirs befindet. Ferner kann die Motor-Pumpeneinheit direkt aus dem Hydraulikreservoir ansaugen. Von Vorteil ist dabei insbesondere, dass insgesamt eine kompaktere, einfachere und leichte Bauweise des Stellgliedes möglich wird.

Des weiteren ist es möglich, dass ein Positionssensor vorgesehen ist, der in den Hydraulikzylinder integriert ist. Mittels des Positionssensors wird es möglich, den Ausfahrzustand des Kolbens zu detektieren. Dadurch kann eine hochgenaue Ansteuerung bzw. Einregelung des Stellgliedes erreicht werden. Beispielsweise kann vorgesehen sein, dass der Positionssensor in eine Bohrung der Kolbenstange eintaucht und anhand des in die Bohrung eintauchenden Anteils des Positionssensors die aktuelle Position der Kolbenstange und damit des Stellgliedes ermittelt wird. Die Bohrung der Kolbenstange kann mit dem Kolbenraum in Verbindung stehen. Diese Bohrung ist vorzugsweise als Axialbohrung entlang der Achse des Kolbens bzw. der Kolbenstange ausgeführt. Des weiteren wird bevorzugt, dass der Positionssensor reibungsfrei bzw. berührungsfrei, also ohne Berührung der Bohrungswandung, arbeitet. Der Positionssensor kann vom Hydraulikfluid umspült sein.

Es wird bevorzugt, wenn das Ventil ein Magnetventil ist und als 3/3-Wegeventil ausgeführt ist. Ein 3/3-Wegeventil weist 3 Anschlüsse bei 3 möglichen Ventilstellungen auf. Magnetventile weisen ferner den Vorteil auf, dass sie sich exakt und hochgenau ansteuern und schalten lassen.

Eine weitere Ausführungsform kann darüber hinaus darin bestehen, dass wenigstens ein erstes und ein zweites Rückschlagventil vorgesehen sind, die derart angeordnet sind, dass beim Ausfahren des Hydraulikzylinders mittels des ersten Rückschlagventils Hydraulikfluid aus dem Hydraulikspeicher in den Kolbenraum nachgesaugt wird oder nachsaugbar ist und beim Einfahren des Hydraulikzylinders mittels des zweiten Rückschlagventils Hydraulikfluid aus dem Kolbenraum in den Ringraum verdrängbar ist.

Ferner ist denkbar, dass ein drittes Rückschlagventil vorgesehen ist, dass in der Verbindung der integrierten Motor-Pumpeneinheit mit dem Ringraumes und/oder dem Kolbenraum angeordnet ist.

Des weiteren betrifft die Erfindung eine Drehgestellsteuerung für ein Drehgestell mit den Merkmalen des Anspruchs 12. Danach ist vorgesehen, dass eine erfindungsgemäße Drehgestellsteuerung für ein Drehgestell wenigstens ein Stellglied nach einem der Ansprüche 1 bis 11 aufweist Weiterhin ist vorteilhaft denkbar, dass wenigstens 4 Stellglieder vorgesehen sind, wobei je zwei Stellglieder paarweise angeordnet sind und mittels der Kontrolleinheit je ein Stellglied eines Stellgliederpaares auf einer Seite des Drehgestells ausgelenkt oder auslenkbar und das jeweils andere Stellglied eines Paares auf einer anderen Seite des Drehgestells eingezogen oder einziehbar ist. Dadurch eine besonders vorteilhafte, aktive Unterstützung der Ausdrehbewegung des Drehgestells bei Kurvenfahrt möglich. Die jeweils paarweise angeordneten Stellglieder sind bevorzugt den äußeren Radachsen, die an einem Drehgestell angebracht ist, oder, wie ebenfalls denkbar, direkt den Drehgestellen zugeordnet.

Weitere Einzelheiten und Vorteile der Erfindung sollen nun nachstehend anhand eines in der Zeichnung näher dargestellten Ausführungsbeispiels erläutert werden. Es zeigen:
- Fig. 1:: eine schematische Schnittdarstellung eines Stellgliedes,
- Fig. 2:: eine schematische Schnittdarstellung eines Stellgliedes,
- Fig. 3:: eine schematische Schnittdarstellung eines Stellgliedes,
- Fig. 4:: eine schematische Schnittdarstellung eines erfindungsgemäßen Stellgliedes in einer vierten Ausführungsform,
- Fig. 5:: eine schematische Schnittdarstellung eines Stellgliedes,
- Fig. 6:: eine perspektivische Ansicht eines erfindungsgemäßen Stellgliedes,
- Fig. 7:: eine schematische Darstellung einer erfindungsgemäßen Drehgestellsteuerung.

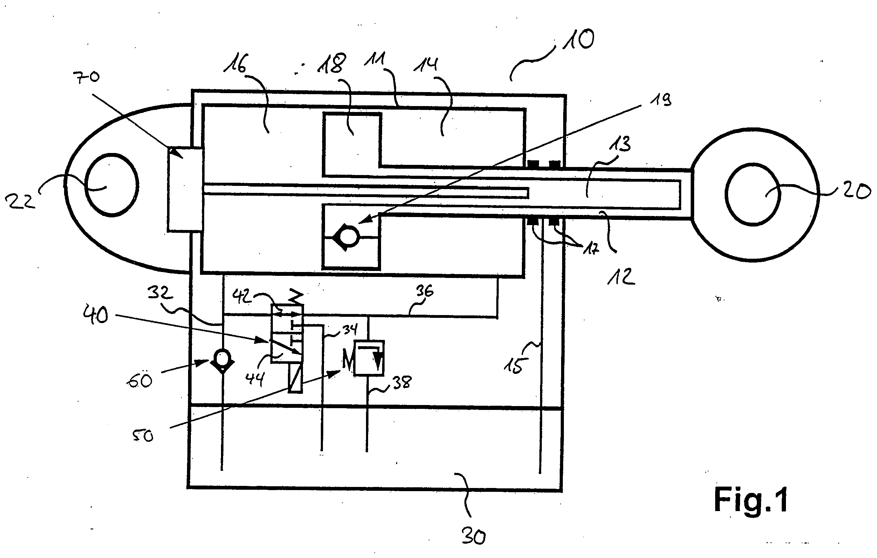

In Figur 1 ist ein Stellglied 10, beispielsweise für ein Drehgestell einer schweren Lokomotive dargestellt. Das Stellglied 10 weist dabei einen Hydraulikzylinder 11 auf, der durch einen Kolben 18 mit Kolbenstange 12 in einen Kolbenraum 16 und einen Ringraum 14 unterteilt ist.

Das Stellglied 10 weist ferner Aufnahmen 20 und 22 auf, in denen beispielsweise Befestigungsbolzen für ein nicht näher dargestelltes Drehgestell eingebracht werden können. Die Aufnahmen 20 und 22 können dabei z.B. als Bohrungen aber auch als Gewindebohrungen ausgeführt sein.

Die Aufnahme 20 ist dabei Teil der Kolbenstange 12. Die Kolbenstange 12 weist ferner eine Axialbohrung 13 auf, wobei die Achse der Axialbohrung 13 mit der Achse des Hydraulikzylinders 11 und der Kolbenstange 12 zusammenfällt. In die Axialbohrung 13 taucht die der Positionssensor 13 ein, wobei anhand des Eintauchens des Positionssensors 13 die Stellung des Hydraulikzylinders 12 bzw. die Stellung des Kolbens 18 ermittelt wird. Dies kann beispielsweise durch das Anlegen eines Magnetfeldes oder eines elektrischen Feldes an der Kolbenstange oder am Positionssensor 70 erfolgen, wobei die Stellung des Kolbens 18 dann anhand der Änderung des Magnetfeldes oder des elektrischen Feldes ermittelt wird. Das Signal kann über eine nicht näher dargestellte Leitung abgegriffen werden und an die hier nicht näher dargestellte Kontrolleinheit 110 zu Auswertung bzw. Weiterverarbeitung weitergegeben werden.

Die Kolbenstange 12 ist in einer Ausnehmung des Gehäuses des Stellgliedes 10 geführt. Die Führung wird durch die Leitung 15, die mit dem Hydraulikspeicher 30 in Verbindung steht, geschmiert. Zur Abdichtung sind an der Führungsstelle rechts und links der Leitung 15 Dichtringe 17 zur Abdichtung vorgesehen. Der Hydraulikspeicher 30 ist mit Hydrauliköl gefüllt.

Der Kolbenraum 16 und der Ringraum 14 sind über die Leitung 36 mit einander verbunden. In der Leitung 36 befindet sich das Ventil 40, das als 3/2-Magnet-Wegeventil ausgeführt ist. In der ersten Stellung 42 des Ventil 40 wird die Leitung 36 freigeschalten, so dass der Kolbenraum 16 und der Ringraum 14 verbunden sind. Die Leitung 34 ist in Stellung 42 des Ventils 40 versperrt. Die Leitung 34 ist eine Bypassleitung zur Leitung 32, die den Kolbenraum 16 mit dem Hydraulikspeicher 30 verbindet. Die Leitung 32 weist ferner ein Rückschlagventil 60 auf, das ein Rückströmen von Hydraulikfluid aus der Leitung 32, insbesondere aus dem Kolbenraum 16, in den Hydraulikspeicher 30 verhindert.

Der Kolben 18 weist darüber hinaus ein Rückschlagventil 19 auf, das sich in einer im Kolben 18 befindlichen Verbindungsleitung zwischen dem Ringraum 14 und dem Kolbenraum 16 befindet. Das Rückschlagventil 19 ermöglicht ein Einströmen von Hydraulikfluid vom Kolbenraum 16 in den Ringraum 14, verhindert jedoch ein Einströmen von Hydraulikfluid vom Ringraum 14 in den Kolbenraum 16.

In der ersten Stellung 42 des Ventils 40 strömt durch Anlegen von Druck Hydraulikfluid in den Kolbenraum 16, so dass der Kolben 18 mit der Kolbenstange 12 ausfährt. In der zweiten Stellung 44 des Ventils 40 wird bei Anlegen von Druck das Hydraulikfluid aus dem Kolbenraum 16 über das Rückschlagventil 19 in den Ringraum 14 verdrängt, so dass der Kolben 18 einfährt.

Von der Leitung 36 zweigt eine weitere Leitung 38 zum Hydraulikspeicher 30 ab. In der Leitung 38 befindet sich ein Druckbegrenzungsventil 50, mittels dessen der Druck im Ringraum begrenzt werden kann.

Ein weiterer Vorteil besteht noch darin, dass bei einer Abschaltung der Magnetventile der Kolbenraum 16 und der Ringraum 14 miteinander verbunden sind, so dass das Stellglied 10 kraftfrei geschaltet ist.

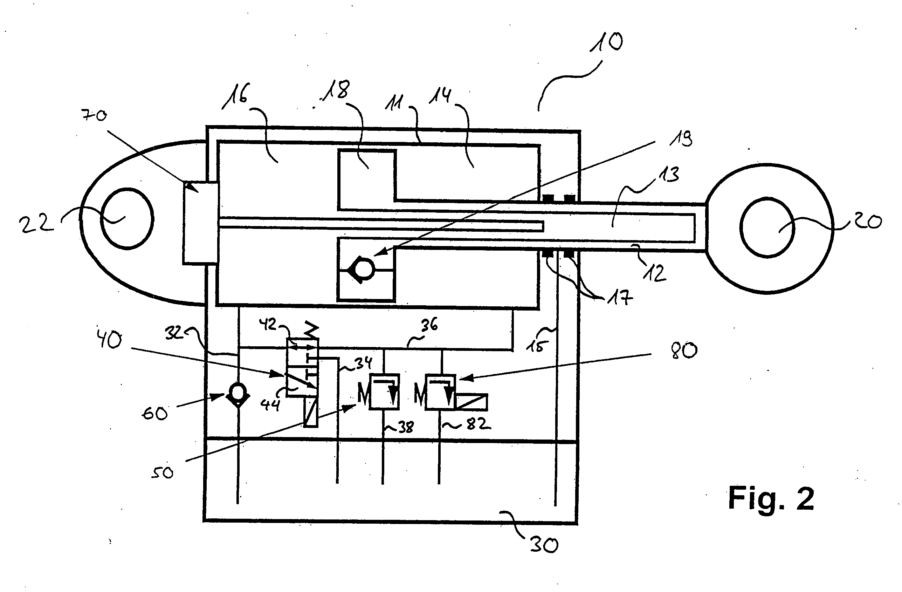

Figur 2 zeigt ein weiteres Stellglied. Die in Figur 2 dargestellte Ausführungsform weist dabei grundsätzlich den gleichen Aufbau wie die in Figur 1 dargestellte Ausführungsform auf. Gleiche Komponenten bzw. Merkmale sind daher mit gleichen Bezugsziffern versehen.

Zusätzlich zu der Figur 1 weist die Figur 2 ein weiteres Proportional-Druckbegrenzungsventil 80, welches sich in einer Leitung 82 befindet, die von der Leitung 36 abzweigt.

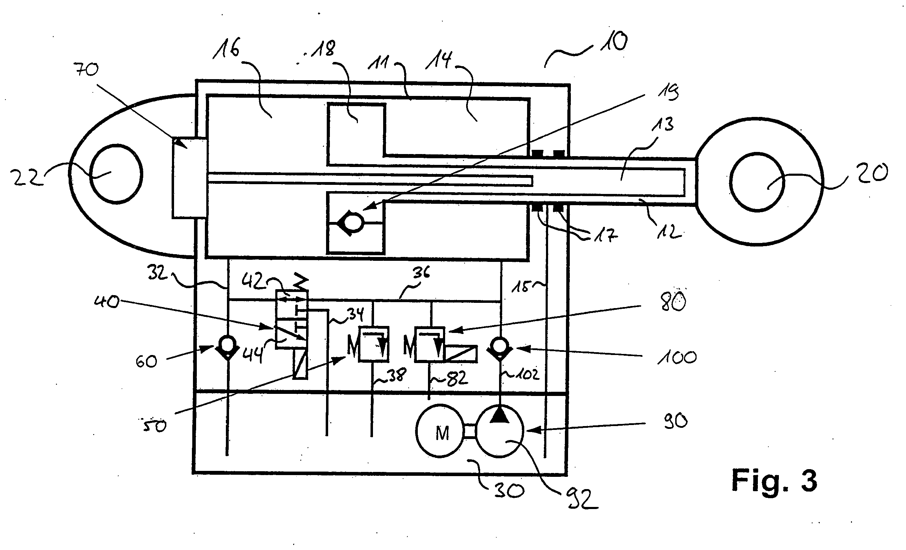

Figur 3 zeigt ferner ein Stellglied, das einen vergleichbaren Aufbau wie die aus Figur 1 und 2 bekannten Ausführungsformen aufweist. Auch hier sind gleiche Komponenten bzw. Merkmale mit gleichen Bezugsziffern versehen.

Figur 3 weist ebenfalls wie Figur 2 ein Proportional-Druckbegrenzungsventil 80 in der von der Leitung 36 abzweigenden Leitung 82 auf, die zum Hydraulikspeicher 30 führt. Ferner ist im Hydraulikspeicher 30 eine Motor-Pumpeneinheit 90 vorgesehen, die einen Motor M sowie eine Pumpe 92 aufweist. Der mittels der Motor-Pumpeneinheit 90 aufgebaute Druck wird über die Leitung 102 zur Leitung 36 und damit zum Hydraulikzylinder 11 geleitet. In der Leitung 102 befindet sich dabei ein Rückschlagventil 100. Das Rückschlagventil 100 verhindert ein Rückströmen von Hydraulikfluid zurück zur Motor-Pumpeneinheit 90 und verhindert somit wirkungsvoll Fehlfunktionen der Motor-Pumpeneinheit 90.

Vergleichbar der Figur 1 führt ein Anlegen von Druck durch die Motor-Pumpeneinheit 90 auf die Leitung 102 hin zur Leitung 36 in der ersten Stellung 42 des Ventils 40 zu einem Ausfahren der Kolbenstange 12 aus dem Hydraulikzylinder 11, da Hydraulikfluid in den Kolbenraum 16 einströmt.

In der zweiten Position 44 des Ventils 40 führt ein Druckanlegen durch die Motor-Pumpeneinheit 90 auf die Leitung 102 und damit hin zur Leitung 36 zu einem Einfahren der Kolbenstange 12, da das Hydraulikfluid aus dem Kolbenraum über das Rückschlagventil 19 in den Ringraum 14 verdrängt wird.

Insbesondere ist von Vorteil, dass das Stellglied 10 als hydraulisch autarke Einheit ausgeführt ist, die lediglich mechanische und elektrische bzw. elektronische Schnittstellen aufweist. Das Stellglied 10 ist dabei als integrierte Baugruppe ausgeführt, weist einen Ventilblock und ein Zylindergehäuse auf, wobei der Ventilblock integraler Bestandteil des Zylindergehäuses ist. Ferner ist die Motor-Pumpeneinheit 90 innerhalb des Hydraulikreservoirs angeordnet, so dass sich eine kompakte Bauweise ergibt. Durch die Anordnung der Motor-Pumpeneinheit 90 innerhalb des Hydraulikspeichers 30 ergibt sich ferner ein exzellenter Wärmeaustausch für die Motor-Pumpeneinheit 90, die dadurch keiner gesonderten Kühlung bedarf.

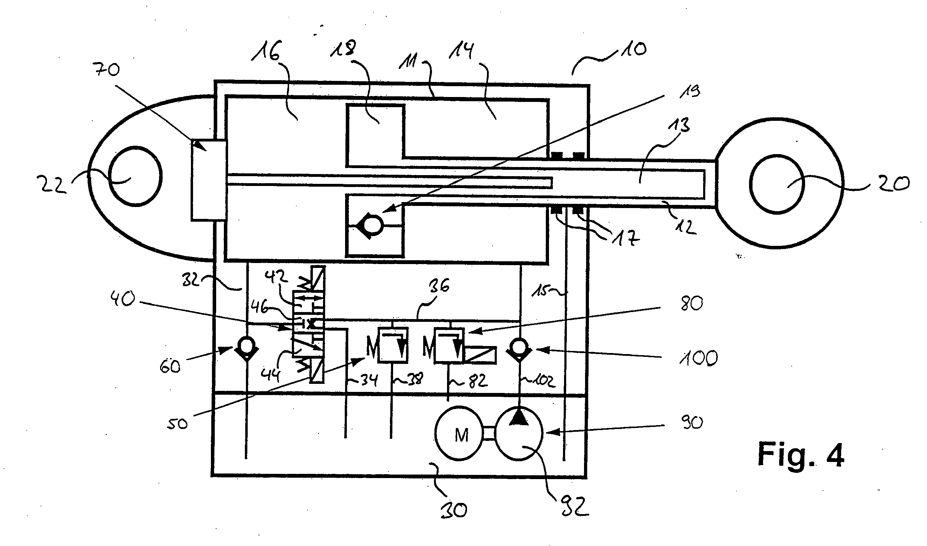

Figur 4 zeigt eine von der Figur 3 leicht abweichende Ausführungsform. In diesem Fall ist das Magnetventil 40 nicht als 3/2-Wegeventil, sondern als 3/3-Wegeventil ausgeführt. In der Mittelstellung 46 bzw. dritten Stellung des Ventils 40 wird der Kolbenraum 16 isoliert und der Ringraum 14 über eine in dem Ventil 40 integrierte Drossel mit dem Hydraulikreservoir 30 verbunden. Dadurch wird es möglich, dass das Stellglied 10 als Dämpfer wirken kann.

Der Vorteil der in den Hydraulikspeicher 30 integrierten Motor-Pumpeneinheit 90 besteht insbesondere darin, dass das Stellglied hydraulisch autark arbeitet und nur elektronisch bzw. elektrisch über nicht näher dargestellte Leitungen angesteuert werden muss. Dadurch wird die Schnittstellenanzahl, insbesondere die Schnittstellenanzahl hinsichtlich mechanischer und elektrischer bzw. elektronischer Schnittstellen reduziert, ferner fallen sämtliche hydraulischen Schnittstellen vollkommen weg.

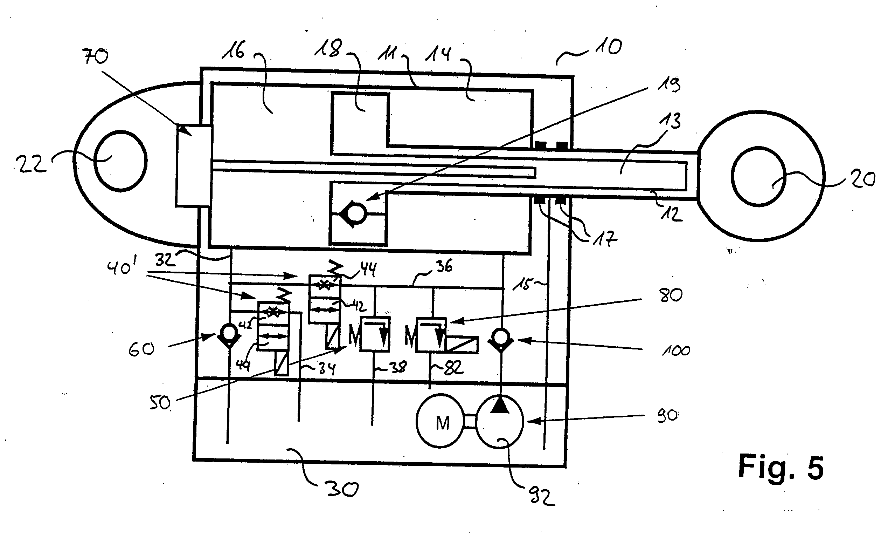

Figur 5 zeigt eine weitere Abwandlung der Figur 3 und 4. Figur 5 bildet die Funktion des 3/2-Wegeventils bzw. des 3/3-Wegeventils mittels zweier 2/2-Wegeventile nach. Dabei befindet sich ein 2/2-Wegeventil 40' in der Leitung 36, während sich das zweite 2/2-Wegeventil 40' in der Leitung 34 befindet. In der ersten Stellung 42 ist das in der Leitung 36 angeordnete Magnetventil 40' freigeschaltet, während das zweite, in der Leitung 34 angeordnete Magnetventil 40' gesperrt ist. In der zweiten Stellung 44 werden die Magnetventile 40' entsprechend entgegengesetzt geschaltet, so dass die Leitung 36 gesperrt und die Leitung 34 freigegeben ist.

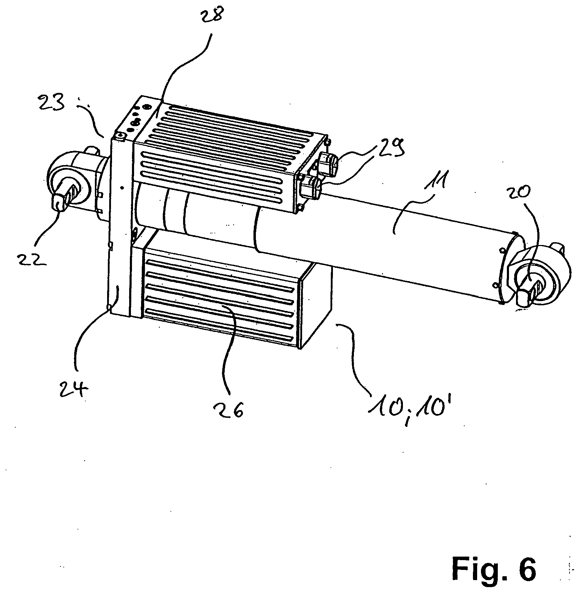

Figur 6 zeigt in perspektivischer Ansicht das erfindungsgemäße Stellglied 10 in der Ausführungsform als integrierte Baugruppe 10'. Die integrierte Baugruppe 10' weist ein Zylindergehäuse 23 auf, in dem der Hydraulikzylinder 11 und der Ventilblock 24 aufgenommen sind. Ferner umfasst das Zylindergehäuse 23 einen oberen Zylindergehäuseteil 28 sowie einen unteren Zylindergehäuseteil 26. Die Aufnahmen 20 und 22 sind als Verbolzungen ausgeführt, die über paarige, bolzenendseitige Bohrungen senkrecht zur Bolzenachse verfügen.

Im unteren Zylindergehäuseteil 26 befindet sich der in Figur 6 nicht dargestellte Hydraulikspeicher 30, sowie die ebenfalls hier nicht dargestellte Motorpumpeneinheit 90, die sich wiederum innerhalb des Hydraulikspeichers 30 befindet.

Im oberen Zylindergehäuseteil 28 befinden sich ein nicht näher dargestelltes Kontrollventil sowie wenigstens ein hier ebenfalls nicht dargestellter Drucksensor. Ferner sind hier Anschlüsse 29 für das Kontrollventil und den wenigstens einen Drucksensor erkennbar.

Der Motor der Motor-Pumpeneinheit 90, die im unterem Zylindergehäuseteil 26 innerhalb des Hydraulikspeichers 30 untergebracht ist, ist vorzugsweise ein robuster Induktionsmotor oder Saugmotor, der mit einer konstanten Geschwindigkeit läuft, sobald das Stellglied 10 vom passiven in den aktiven Zustand geschaltet wird. Im passiven Betriebszustand sind Motor als auch Pumpe ausgeschaltet.

Zur Reduzierung der Lastspitze beim Hochfahrend des z.B. als Elektromotor ausgeführten Motors M der Motor-Pumpeneinheit 90, wird die Pumpe 92 vor Inbetriebnahme der Proportional-Druckbegrenzungsventile gestartet. Zum Schutz vor Überhitzung des Motors ist jeder Teil des Motors mit einem Hitzeschutzschalter ausgestattet.

Die Pumpe 92 ist eine robuste hydraulische Pumpe mit einem vordefinierten, festen Hubvolumen bzw. Auswurfvolumen. Die Pumpe 92 wird dabei vorzugsweise bei 210 bar und 3000 rpm betrieben. Besonders vorteilhaft ist es, wenn die Pumpe 6fach höher (in Bezug auf die benötigte Leistung) als notwendig ausgelegt ist. Hierdurch kann die Lebensdauer erhöht werden, da insbesondere der reibungsbedingte Verschleiß gering gehalten wird. Eine Installation der Pumpe 92 innerhalb des Hydraulikreservoirs leistet einen sehr hohen Beitrag zur Leckagenverhinderung. Jegliche Pumpleckage spielt auf jeden Fall innerhalb des Hydraulikspeichers 30 ab, so dass die Gefahr einer externen Leckage nicht auftreten kann. Darüber hinaus müssen keine beweglichen Teile nach außen hin abgedichtet werden.

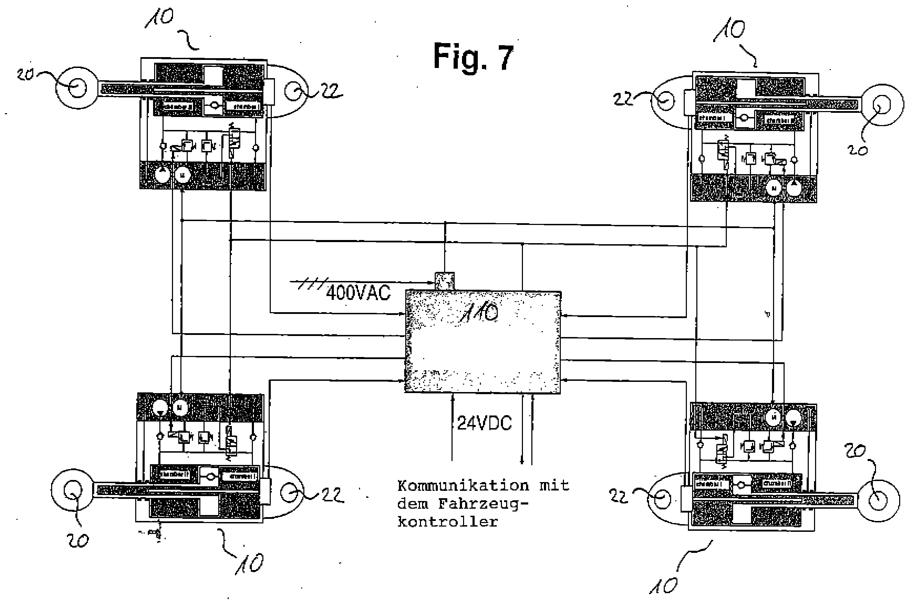

Figur 7 zeigt schematisch eine erfindungsgemäße Drehgestellsteuerung eines Drehgestells für beispielsweise eine schwere Lokomotive, die vier Stellglieder 10 aufweist, wobei je zwei Stellglieder 10 paarweise zur Steuerung der Räder einer Achse angeordnet sind. Mittels einer Kontrolleinheit 110 kann nun beispielsweise zur Unterstützung der Ausdrehbewegung des Drehgestells eine Auslenkung der oberen Stellglieder 10 vorgenommen werden, während die unteren Stellglieder 10 auf der anderen Seite des Drehgestells eingezogen werden. Die Kontrolleinheit 110 weist eine Verbindung zur nicht näher dargestellten Steuerung des Schienenfahrzeugs auf. Der Signalaustausch mit der Steuerung des Schienfahrzeugs erfolgt mit 24 V(DC). Die Stromversorgung in der Kontrolleinheit 110 kann mit 400 V(AC) erfolgen. Die Kontrolleinheit 110 steuert vorzugsweise drei Hauptfunktionsbereiche der Stellglieder 10. Diese drei Hauptfunktionsbereiche sind der hydraulische Antrieb umfassend insbesondere die integrierte Motor-Pumpeneinheit 90, die Ansteuerung des Ventilblocks umfassend die Ventile sowie wenigstens ein Drucksensor sowie als dritte funktionale Einheit den hydraulischen Stellantrieb umfassend den integrierten Positionssensor 70.

Die Kontrolleinheit 110 kann unterschiedliche Schnittstellen, wie beispielsweise eine RS232 - Schnittstelle für Diagnose und Wartungszwecke, eine RS485 - Schnittstelle, eine CAN-Schnittstelle zur Kommunikation mit der Steuerung des Schienenfahrzeug-Steuerungssystems sowie des Weiteren eine MVB- oder Ethernet-Schnittstelle aufweisen. Ferner können I/O-Schnittstellen vorgesehen sein, wie analoge, diskrete oder PWM-Schnittstellen. Bevorzugt wird ferner, wenn die Kontrolleinheit 110 mehrere Speicherbereiche wie einen Flash-Speicher, einen RAM-Speicher und einen BOOT-Flash-Speicher aufweist.

## Patentansprüche

1. Stellglied (10) mit einem Hydraulikspeicher (30) und einem Hydraulikzylinder (11), der durch einen Kolben (18) mit Kolbenstange (12) in einen Kolbenraum (16) und einen Ringraum (14) unterteilt ist, wobei Kolbenraum (16) und Ringraum (14) mit dem Hydraulikspeicher (30) verbindbar sind, wobei wenigstens ein Ventil (40) vorgesehen ist, wobei in einer ersten Stellung (42) des Ventils (40) der Kolbenraum (16) mit dem Ringraum (14) verbunden ist und in einer zweiten Stellung (44) des Ventils (40) der Kolbenraum (16) mit dem Hydraulikspeicher (30) verbunden ist, **dadurch gekennzeichnet, dass** das Ventil (40) in einer dritten Stellung (46) den Kolbenraum (16) isoliert und den Ringraum (14) mit dem Hydraulikspeicher (30) verbindet, und dass das Stellglied (10) mittels einer Kontrolleinheit (110) ansteuerbar ist.

2. Stellglied (10) nach Anspruch 1, **dadurch gekennzeichnet, dass** wenigstens ein Druckbegrenzungsventil (50) vorgesehen ist, wobei mittels des Druckbegrenzungsventils (50) der Ringraum (14) und der Hydraulikspeicher (30) verbunden werden können und wobei mittels des Druckbegrenzungsventils (50) der Druck im Ringraum (14) eingestellt wird oder einstellbar ist.

3. Stellglied (10) nach Anspruch 2, **dadurch gekennzeichnet, dass** ein Wegeventil vorgesehen ist, wobei das Wegeventil parallel dem Druckbegrenzungsventil (50) angeordnet ist.

4. Stellglied (10) nach einem der vorhergehenden Ansprüche, **dadurch gekennzeichnet, dass** das Stellglied (10) eine integrierte Motor-Pumpeneinheit (90) aufweist, die mit dem Ringraum (14) verbunden ist.

5. Stellglied (10) nach einem der vorhergehenden Ansprüche, **dadurch gekennzeichnet, dass** das Stellglied (10) als integrierte Baugruppe (10') ausgeführt ist.

6. Stellglied (10) nach einem der vorhergehenden Ansprüche, **dadurch gekennzeichnet, dass** das Stellglied (10) einen Ventilblock (24) und ein Zylindergehäuse (23) aufweist, wobei der Ventilblock (24) integraler Bestandteil des Zylindergehäuses (23) ist.

7. Stellglied (10) nach einem der vorhergehenden Ansprüche, **dadurch gekennzeichnet, dass** die Motor-Pumpeneinheit (90) innerhalb des Hydraulikreservoirs (30) angeordnet ist.

8. Stellglied (10) nach einem der vorhergehenden Ansprüche, **dadurch gekennzeichnet, dass** ein Positionssensor (70) vorgesehen ist, der in den Hydraulikzylinder (11) integriert ist.

9. Stellglied (10) nach einem der vorhergehenden Ansprüche, **dadurch gekennzeichnet, dass** das Ventil (40; 40') ein Magnetventil ist und als 3/3-Wegeventil ausgeführt ist.

10. Stellglied (10) nach einem der vorhergehenden Ansprüche, **dadurch gekennzeichnet, dass** wenigstens ein erstes und ein zweites Rückschlagventil vorgesehen sind, die derart angeordnet sind, dass beim Ausfahren des Hydraulikzylinders (11) mittels des ersten Rückschlagventils (60) Hydraulikfluid aus dem Hydraulikspeicher (30) in den Kolbenraum (16) nachgesaugt wird oder nachsaugbar ist und beim Einfahren des Hydraulikzylinders (11) mittels des zweiten Rückschlagventils (19) Hydraulikfluid aus dem Kolbenraum (16) in den Ringraum (14) verdrängbar ist.

11. Stellglied (10) nach einem der Ansprüche 4 bis 10 , **dadurch gekennzeichnet, dass** ein drittes Rückschlagventil (100) vorgesehen ist, dass in der Verbindung (102) der integriertem Motor-Pumpeneinheit (90) mit dem Ringraumes (14) und/oder dem Kolbenraum (16) angeordnet ist.

12. Drehgestellsteuerung für ein Drehgestell mit wenigstens einem Stellglied (10) nach einem der vorhergehenden Ansprüche.

13. Drehgestellsteuerung für ein Drehgestells nach Anspruch 12, **dadurch gekennzeichnet, dass** wenigstens 4 Stellglieder (10) vorgesehen sind, wobei je zwei Stellglieder (10) paarweise angeordnet sind und mittels der Kontrolleinheit (110) je ein Stellglied (10) eines Stellgliederpaares auf einer Seite des Drehgestells ausgelenkt oder auslenkbar und das jeweils andere Stellglied eines Paares auf einer anderen Seite des Drehgestells eingezogen oder einziehbar ist.

## Claims

1. An actuator (10) having a hydraulic accumulator (30) and a hydraulic cylinder (11) that is divided into a piston space (16) and into a ring space (14) by a piston (18) having a piston rod (12), wherein the piston space (16) and the ring space (14) are connectable to the hydraulic accumulator (30); and wherein at least one valve (40) is provided, with the piston space (16) being connected to the ring space (14) in a first position (42) of the valve (40) and with the piston space (16) being connected to the hydraulic accumulator (30) in a second position (44) of the valve (40), **characterized in that** the valve (40) isolates the piston space (16) and connects the ring space (14) to the hydraulic accumulator (30) in a third position (46); and **in that** the actuator (10) is controllable by means of a control unit (110).

2. An actuator (10) in accordance with claim 1, **characterized in that** at least one pressure-relief valve (50) is provided, with the ring space (14) and the hydraulic accumulator (30) being able to be connected by means of the pressure-relief valve (50), and with the pressure in the ring space (14) being set or settable by means of the pressure relief valve (50).

3. An actuator (10) in accordance with claim 2, **characterized in that** a directional valve is provided, with the directional valve being arranged in parallel with the pressure-relief valve (50).

4. An actuator (10) in accordance with one of the preceding claims, **characterized in that** the actuator (10) has an integrated motor-pump unit (90) that is connected to the ring space (14).

5. An actuator (10) in accordance with one of the preceding claims, **characterized in that** the actuator (10) is designed as an integrated assembly (10').

6. An actuator (10) in accordance with one of the preceding claims, **characterized in that** the actuator (10) has a valve block (24) and a cylinder housing (23), with the valve block (24) being an integral component of the cylinder housing (23).

7. An actuator (10) in accordance with one of the preceding claims, **characterized in that** the motor-pump unit (90) is arranged within the hydraulic reservoir (30).

8. An actuator (10) in accordance with one of the preceding claims, **characterized in that** a position sensor (70) is provided that is integrated into the hydraulic cylinder (11).

9. An actuator (10) in accordance with one of the preceding claims, **characterized in that** the valve (40; 40') is a solenoid valve and is designed as a 3/3-way valve.

10. An actuator (10) in accordance with one of the preceding claims, **characterized in that** at least one first check valve and one second check valve are provided that are arranged such that when the hydraulic cylinder (11) is moved out, hydraulic fluid is or can be sucked out of the hydraulic accumulator (30) into the piston space (16) by means of the first check valve (60) or when the hydraulic cylinder (11) is moved in, hydraulic fluid can be displaced out of the piston space (16) into the ring space (14) by means of the second check valve (19).

11. An actuator (10) in accordance with one of the claims 4 to 10, **characterized in that** a third check valve (100) is provided that is arranged in the connection (102) of the integrated motor-pump unit (90) to the ring space (14) and/or to the piston space (16).

12. A bogy control for a bogy having at least one actuator (10) in accordance with one of the preceding claims.

13. A bogy control for a bogy in accordance with claim 12, **characterized in that** at least 4 actuators (10) are provided, with a respective two actuators (10) being arranged in pairs and a respective one actuator (10) of an actuator pair being deflected or deflectable at one side of the bogy and with the respective other actuator of a pair being retracted or retractable at another side of the bogy by means of the control unit (110).

## Revendications

1. Actionneur (10) comprenant un accumulateur hydraulique (30) et un vérin hydraulique (11), qui est divisé en une chambre de piston (16) et une chambre annulaire (14) par un piston (18) doté d'une tige de piston (12), dans lequel
la chambre de piston (16) et la chambre annulaire (14) peuvent être reliées à l'accumulateur hydraulique (30), dans lequel
au moins une vanne (40) est prévue, dans lequel dans une première position (42) de la vanne (40), la chambre de piston (16) est reliée à la chambre annulaire (14) et dans une deuxième position (44) de la vanne (40) la chambre de piston (16) est reliée à l'accumulateur hydraulique (30), **caractérisé en ce que** la vanne (40), dans une troisième position (46), isole la chambre de piston (16) et relie la chambre annulaire (14) à l'accumulateur hydraulique (30), et **en ce que** l'actionneur (10) peut être commandé au moyen d'une unité de commande (110).

2. Actionneur (10) selon la revendication 1, **caractérisé en ce qu'**au moins une soupape de limitation de pression (50) est prévue, la chambre annulaire (14) et l'accumulateur hydraulique (30) pouvant être reliés au moyen de la soupape de limitation de pression (50) et la pression dans la chambre annulaire (14) étant ou pouvant être réglée au moyen de la soupape de limitation de pression (50).

3. Actionneur (10) selon la revendication 2, **caractérisé en ce qu'**un distributeur est prévu, le distributeur étant disposé parallèlement à la soupape de limitation de pression (50).

4. Actionneur (10) selon l'une des revendications précédentes, **caractérisé en ce que** l'actionneur (10) comporte une unité moteur-pompe (90) intégrée, qui est reliée à la chambre annulaire (14).

5. Actionneur (10) selon l'une des revendications précédentes, **caractérisé en ce que** l'actionneur (10) est réalisé sous la forme d'un ensemble intégré (10').

6. Actionneur (10) selon l'une des revendications précédentes, **caractérisé en ce que** l'actionneur (10) comporte un bloc de vannes (24) et un châssis de vérin (23), le bloc de vannes (24) faisant partie intégrante du châssis de vérin (23).

7. Actionneur (10) selon l'une des revendications précédentes, **caractérisé en ce que** l'unité moteur-pompe (90) est disposée à l'intérieur de l'accumulateur hydraulique (30).

8. Actionneur (10) selon l'une des revendications précédentes, **caractérisé en ce qu'**un capteur de position (70), qui est intégré dans le vérin hydraulique (11), est prévu.

9. Actionneur (10) selon l'une des revendications précédentes, **caractérisé en ce que** la vanne (40 ; 40') est une électrovanne et est réalisée sous la forme d'un distributeur 3/3 voies.

10. Actionneur (10) selon l'une des revendications précédentes, **caractérisé en ce qu'**au moins un premier et un deuxième clapet antiretour sont prévus, qui sont disposés de telle manière que, lors de l'extension du vérin hydraulique (11), du fluide hydraulique est ou peut être aspiré de l'accumulateur hydraulique (30) dans la chambre de piston (16) au moyen du premier clapet antiretour (60) et lors de la rétraction du vérin hydraulique (11), du fluide hydraulique peut être déplacé de la chambre de piston (16) dans la chambre annulaire (14) au moyen du deuxième clapet antiretour (19).

11. Actionneur (10) selon l'une des revendications 4 à 10, **caractérisé en ce qu'**un troisième clapet antiretour (100), qui est disposé dans la liaison (102) de l'unité moteur-pompe (90) intégrée avec la chambre annulaire (14) et/ou la chambre de piston (16), est prévu.

12. Commande de bogie destinée à un bogie comprenant au moins un actionneur (10) selon l'une des revendications précédentes.

13. Commande de bogie destinée à un bogie selon la revendication 12, **caractérisée en ce qu'**au moins 4 actionneurs (10) sont prévus, dans laquelle deux actionneurs (10) sont respectivement disposés par paires et, au moyen de l'unité de commande (110), un actionneur (10) d'une paire d'actionneurs est ou peut être respectivement sorti d'un côté du bogie et l'autre actionneur respectif d'une paire est ou peut être rétracté d'un autre côté du bogie.
